# EUROPÄISCHE PATENTSCHRIFT

(11) **EP 2 740 980 B1**
(45) Veröffentlichungstag und Bekanntmachung des Hinweises auf die Patenterteilung: **12.12.2018**
(21) Anmeldenummer: 13192038.1
(22) Anmeldetag: 08.11.2013
(51) Int. Cl.: F16K 27/00, F16K 11/07, F16K 31/06

(54) **Stetig verstellbares hydraulisches Einbauventil**
Continuously adjustable built-in hydraulic valve
Soupape intégrée hydraulique réglable en continu

(30) Priorität: 06.12.2012 DE 102012222399
(43) Veröffentlichungstag der Anmeldung: 11.06.2014
(73) Patentinhaber: ROBERT BOSCH GMBH, 70442 Stuttgart (DE)
(72) Erfinder: Schneider, Konrad, 97778 Fellen (DE); Zaiser, Liebhart, 97753 Karlstadt (DE); Selke, Andre, 06618 Naumburg (DE)
(74) Vertreter: Maiß, Harald

(56) Entgegenhaltungen:
- WO-A1-2009/088504
- DE-A1-102008 013 270
- SU-A1- 981 718
- US-A- 3 016 917
- US-A- 4 646 786

## Beschreibung

Die Erfindung betrifft ein stetig verstellbares hydraulisches Einbauventil gemäß dem Oberbegriff des Patentanspruchs 1.

Es ist bekannt, dass in zahlreichen hydraulischen Anwendungen Proportional-Wegeventile eingesetzt werden, die eine stetige Veränderung eines hydraulischen Volumenstroms zulassen. Beispielsweise können solche Proportional-Wegeventile in hydraulischen Steuerscheiben-Ventilen für Traktoren und mobile Arbeitsgeräte angewendet werden. Ein Beispiel für ein solches Ventil geht aus der DE 10 2008 013 270 A1 in Form eines 4/3-Einbauwegeventils hervor, das vier hydraulische Anschlüsse und drei Ventilstellungen ermöglicht. Das darin beschriebene, elektromagnetisch betätigbare Einbauwegeventil ist dazu vorgesehen, in eine Aufnahmebohrung beziehungsweise eine Stufenbohrung eingebaut zu werden. Nachteilig daran ist, dass ein solches Proportional-Wegeventil konstruktiv aufwendig und daher kostenintensiv gefertigt werden muss.

Aus der EP 1 420 321 A2 geht ein Proportionalventil hervor, das eine vollkommen andere Anschlussbelegung als das oben beschriebene, aus der DE 10 2008 013 A1 bekannte, Einbauwegeventil aufweist. Es weist ein Gehäuse mit einem ersten und einem zweiten Arbeitsanschluss, einem Zulaufanschluss und einem Rücklaufanschluss auf. In dem Gehäuse ist ein Ventilschieber axialverschiebbar aufgenommen und wird durch wenigstens eine Feder in einer axialen Mittelstellung gehalten. Der Ventilschieber lässt sich mittels eines Magneten in zwei entgegen gesetzte axiale Richtungen aus der Mittelstellung heraus verstellen. Außerhalb der Mittelstellung ist jeweils ein Arbeitsanschluss weiter mit dem Rücklaufanschluss fluidisch verbunden, wobei der andere Arbeitsanschluss druckgeregelt wird. Nachteilig daran ist, dass ein solches Proportionalventil konstruktiv aufwendig und daher kostenintensiv gestaltet ist. Für die Praxis hat es sich als nachteilig erwiesen, dass ein solches Ventil relativ viel Einbauraum benötigt.

Ein weiteres Beispiel eines Proportionalventil ist in der US 5 249 603 A beschrieben. Auch hierbei ist nachteilig, dass das beschriebene Ventil konstruktiv aufwendig aufgebaut ist und relativ viel Einbauraum benötigt.

In der SU 981 718 A1 ist ein Stellglied gezeigt, welches einen Zulaufanschluss mit einer ersten und einer zweiten Radialöffnung hat. Weiter ist ein erster und ein zweiter Arbeitsanschluss gezeigt, die jeweils eine Radialöffnung haben. Dabei ist entweder die Radialöffnung am Zulaufanschluss oder die Radialöffnung an den einem der Arbeitsanschüsse mit einem zugeordneten Rückflaufanschluss verbunden. Eine direkte fluidische Verbindung zwischen den vorstehenden Radialöffnungen nicht gegeben.

Weitere Ventile mit einem Stellglied sind aus der US 4 646 786 A, der WO 2009/088054 A1 und der US 3 016 917A bekannt.

Die Aufgabe der Erfindung ist es daher, mit konstruktiv möglichst einfachen Mitteln ein platzsparendes Einbauventil mit der Möglichkeit einer hydraulischen Druckregelung zu schaffen.

Diese Aufgabe wird gelöst durch ein hydraulisches Einbauventil mit den Merkmalen des Patentanspruchs 1.

Vorteilhafte Weiterbildungen der Erfindung sind in den Unteransprüchen angegeben.

Das erfindungsgemäße stetig verstellbare hydraulische Einbauventil weist ein Gehäuse auf, das in seiner Einbaurichtung stirnseitig einen mit einer Druckmittelquelle verbindbaren hydraulischen Zulaufanschluss und in radialer Richtung einen ersten und einen zweiten hydraulischen Arbeitsanschluss, die insbesondere mit einem hydraulischen Aktor oder Verbraucher fluidisch verbindbar sind, sowie einen mit einem Druckmitteltank verbindbaren hydraulischen Rücklaufanschluss aufweist. Das Gehäuse weist eine Axialbohrung mit einem darin axialbeweglich geführten Stellglied auf, das mittels wenigstens einer Feder in einer axialen Mittelstellung haltbar und durch eine steuerbare Betätigung axial aus der Mittelstellung heraus stetig verstellbar ist. Der erste Arbeitsanschluss und/oder der zweite Arbeitsanschluss sind durch eine axiale Verstellung des Stellglieds mit dem Rücklaufanschluss fluidisch verbindbar. Erfindungsgemäß weist das Stellglied eine radiale Erweiterung mit einer ersten Steuerkante zum stetigen Öffnen und/oder Schließen einer ersten Radialöffnung des Rücklaufanschlusses und mit einer zweiten Steuerkante zum stetigen Öffnen und/oder Schließen einer zweiten Radialöffnung des Rücklaufanschlusses auf.

Unter stetiger Verstellbarkeit des Stellglieds ist zu verstehen, dass die erste und die zweite Steuerkante die zugeordneten Radialöffnungen des Rücklaufanschlusses kontinuierlich öffnen und schließen können, wenn sich das Stellglied aus seiner federzentrierten Mittelstellung heraus in die entsprechende axiale Richtung bewegt. Dabei kann das Stellglied ein in der Hydraulik bekannter Ventilschieber sein, der eine radiale Erweiterung aufweist. Zum Ausbilden der ersten und/oder der zweiten Radialöffnung des Rücklaufanschlusses kann das Gehäuse des Einbauventils beispielsweise eine erste Reihe von radialen Durchbrüchen und eine zweite Reihe von radialen Durchbrüchen aufweisen. Das Stellglied kann so gelagert sein, dass es sich durch eine Betätigung aus einer federzentrierten Mittelstellung heraus in zwei entgegen gerichtete Axialrichtungen innerhalb der Axialbohrung bewegen lässt, wobei die Betätigung vorzugsweise elektromagnetisch erfolgt. Die Druckmittelquelle kann jede beliebige Art einer Hydraulikdruck erzeugenden Einrichtung, beispielsweise eine Hydraulikpumpe, sein.

Die erfindungsgemäße konstruktive Ausgestaltung des Stellglieds erlaubt eine besonders kurze Bauform des Einbauventils. Dadurch ist es vorteilhafterweise möglich, dieses Einbauventil in eine Aufnahmebohrung für ein 4/3-Proportionalventil in Cartridge-Bauweise mit gleicher Anschlussbelegung einzusetzen beziehungsweise einzubauen. In anderen Worten, schafft die Erfindung ein 4/3-Druckregelventil, das bei gleicher Anschlussbelegung in die Aufnahmebohrung eines 4/3-Proportionalventils passt. Bemerkenswert ist dabei, dass das erfindungsgemäße Einbauventil deutlich einfacher als ein entsprechendes Proportionalventil aufgebaut ist. Die Erfindung ermöglicht somit auf besonders kostengünstige Art und Weise die Austauschbarkeit eines herkömmlichen Proportionalventils.

Besonders präzise lässt sich die fluidische Verbindung des ersten und/oder zweiten Arbeitsanschlusses mit dem Rücklaufanschluss steuern, wenn die Erweiterung des Stellglieds axial von einer ersten Axialfläche und einer von dieser weg weisenden zweiten Axialfläche begrenzt ist, wobei abseits der axialen Mittelstellung des Stellglieds jeweils eine der Axialflächen fluidisch entlastbar ist. Vorteilhaft daran ist, dass abseits der Mittelstellung des Stellglieds jeweils eine der beiden Axialflächen zum Rücklaufanschluss hin entlastet ist, so dass für eine Druckregelung des Einbauventils nur die fluidische Kraft auf die andere, das heißt die aktive, Axialfläche genutzt wird. Darüber hinaus lässt sich eine derart gestaltete radiale Erweiterung des Stellglieds fertigungstechnisch einfach fertigen.

Eine besonders vorteilhafte Ausführungsform der Erfindung sieht vor, dass in der Mittelstellung des Stellglieds die erste Axialfläche im Bereich der ersten Radialöffnung des Rücklaufanschlusses und die zweite Axialfläche im Bereich der zweiten Radialöffnung des Rücklaufanschlusses angeordnet sind. Diese räumliche Anordnung der Erweiterung entlang des Stellglieds erlaubt eine besonders einfache Ausgestaltung des Einbauventils.

Erfindungsgemäß wird vorgeschlagen, dass der erste und/oder der zweite Arbeitsanschluss jeweils eine erste und eine zweite Radialöffnung aufweisen, die in axialer Richtung voneinander beanstandet sind. Die erste und die zweite Radialöffnung können dabei das Gehäuse in radialer Richtung, beispielsweise in Form einer ersten Reihe von Durchbrüchen und einer zweiten Reihe von Durchbrüchen, durchbrechen.

Die Erfindung sieht vor, dass die erste Radialöffnung des ersten Arbeitsanschlusses mit der Axialfläche des Stellglieds fluidisch verbunden ist und dass die erste Radialöffnung (38) des zweiten Arbeitsanschlusses (36) mit der Axialfläche (78) des Stellglieds (68) fluidisch verbunden ist.

Vorteilhaft ist es, wenn mittels der zweiten Radialöffnung des ersten und/oder des zweiten Arbeitsanschlusses eine fluidische Verbindung des Zulaufanschlusses mit dem jeweiligen Arbeitsanschluss stetig steuerbar ist.

In einer bevorzugten Weiterbildung der Erfindung weist das Stellglied eine in Längsrichtung des Stellglieds beziehungsweise des Einbauventils verlaufende Axialbohrung auf, die mit dem Zulaufanschluss des Einbauventils fluidisch verbindbar ist. Eine Axialbohrung lässt sich fertigungstechnisch einfach in das Stellglied einbringen und ermöglicht eine präzise Steuerung eines Fluidstroms vom Zulaufanschluss durch das Stellglied hindurch. Des Weiteren ermöglicht die Axialbohrung des Stellglieds die Einsparung eines ringförmigen Dichtungselements in Form eines so genannten O-Rings.

Eine vorteilhafte Ausführungsform der Erfindung sieht vor, dass die Axialbohrung des Stellglieds eine erste Radialöffnung und eine zweite Radialöffnung aufweist, die mit dem ersten und/oder dem zweiten Arbeitsanschluss fluidisch verbindbar sind.

Für eine präzise Führung des Stellglieds und eine einfache Montierbarkeit des Stellglieds innerhalb des Gehäuses hat es sich als vorteilhaft erwiesen, wenn in das Gehäuse eine separate erste Buchse und eine separate zweite Buchse einbringbar und im Gehäuse befestigbar sind. Die erste und die zweite Buchse ermöglichen somit das einfache Montieren des Stellglieds mitsamt dessen Erweiterung innerhalb der Axialbohrung des Gehäuses, die damit durchgängig einen konstanten Bohrdurchmesser aufweisen kann. Zudem wird das Stellglied axialverschieblich gelagert, ohne ein Kippen des Stellglieds innerhalb der Axialbohrung des Gehäuses zu erlauben.

Um die Axialbohrung des Gehäuses in axialer Richtung abzudichten und gleichzeitig eine fluidische Verbindung der Ventilanschlüsse zu ermöglichen, können die erste Buchse und/oder die zweite Buchse jeweils eine Radialöffnung aufweisen, die mit jeweils einem Arbeitsanschluss fluidisch verbindbar sind.

Besonders vorteilhaft lässt sich die Erfindung nutzen, wenn das Einbauventil als ein so genanntes Cartridgeventil ausgeführt ist.

Im Folgenden wird ein vorteilhaftes Ausführungsbeispiel der Erfindung anhand einer Zeichnung näher erläutert. Im Einzelnen zeigt:

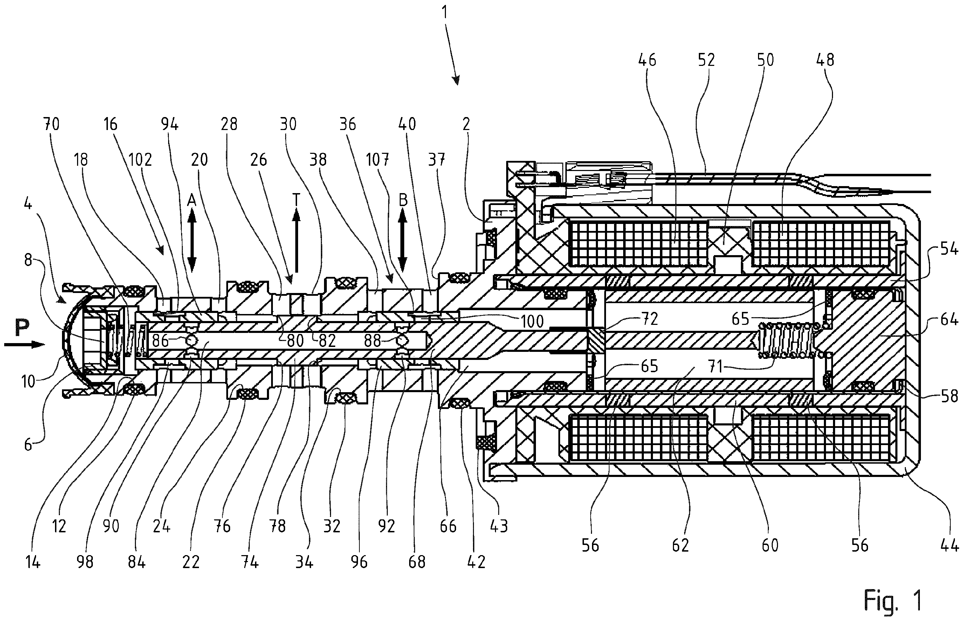

Figur 1 ein Ausführungsbeispiel eines erfindungsgemäßen Einbauventils in einem Längsschnitt.

Figur 1 zeigt in einem Längsschnitt ein erfindungsgemäßes Einbauventil 1 in Cartridge-Bauweise. Ein solches Einbauventil 1 eignet sich besonders gut zum Einbau in eine Aufnahmebohrung, in die sonst ein herkömmliches 4/3-Wegeventil eingebaut wird, wie es beispielweise aus der DE 10 2008 013 270 A1 bekannt ist. Das heißt, dass das aus der DE 10 2008 013 270 A1 bekannte 4/3-Wegeventil durch das erfindungsgemäße Einbauventil 1 ersetzt werden kann, ohne dass hierfür die Aufnahmebohrung nennenswert verändert werden muss.

Das Einbauventil 1 verfügt über ein Gehäuse 2, das vorzugsweise aus einem Stahl gefertigt ist. An einer Stirnseite, die in Figur 1 links angeordnet ist, weist das Gehäuse 2 einen hydraulischen Zulaufanschluss 4 auf, über den dem Einbauventil 2 ein Druckmittel, also beispielsweise ein Hydrauliköl, in einer Zuführrichtung P, das heißt in einer Druckzuführrichtung, zugeführt werden kann. Der Zulaufanschluss 4 ist durch ein in das Gehäuse 2 eingeschraubtes Verschlussstück 6 mit einer darin vorgesehenen Eingangsbohrung 8 ausgebildet. Das Verschlussstück 6 ist aus einem Stahl gefertigt und ist von einem aus Kunststoff gefertigten Zulaufsieb 10 abgedeckt, um vor Schmutzeintrag geschützt zu werden. Zum Einschrauben in das Gehäuse 2 weist das Verschlussstück 6 ein Außengewinde auf, das mit einem Innengewinde des Gehäuses 2 zusammenwirkt.

An der Außenseite des Gehäuses 2 ist in der Zulaufrichtung P hinter dem Zulaufanschluss 4 ein ringförmiges Dichtungselement 12 in Form eines O-Rings angeordnet, der in einer umlaufenden Nut 14 des Gehäuses 2 aufgenommen ist. Das ringförmige Dichtungselement 12 dichtet den Zulaufanschluss 4 gegenüber der Aufnahmebohrung ab, wenn das Einbauventil 1 in einer Aufnahmebohrung eingebaut ist.

Weiter weist das Gehäuse 2 einen ersten hydraulischen Arbeitsanschluss 16 auf, der in der Zuführrichtung P hinter dem ringförmigen Dichtungselement 12 angeordnet ist. Der erste Arbeitsanschluss 16 ist in Form einer außen am Gehäuse 2 umlaufenden Nut ausgebildet und verfügt über eine erste Reihe von Radialöffnungen 20 und eine zweite Reihe von Radialöffnungen 18, die in axialer Richtung des Einbauventils 1, das heißt in der Zuführrichtung P, voneinander beabstandet sind. In anderen Worten, weist der erste Arbeitsanschluss 16 zwei fluidisch voneinander getrennte Radialöffnungen 18, 20 auf, die das Gehäuse 2 in radialer Richtung durchbrechen. Das heißt, dass die erste und die zweite Reihe von Radialöffnungen 20, 18 zwei voneinander getrennte Einzelkanäle des ersten Arbeitsanschlusses 16 darstellen. Die erste und die zweite Reihe von Radialöffnungen 20, 18 können in Form von Bohrungen in das Gehäuse 2 eingebracht werden.

In der Zulaufrichtung P hinter dem ersten Arbeitsanschluss 16 ist ein weiteres ringförmiges Dichtungselement 22 in einer umlaufenden Nut 24 des Gehäuses 2 angeordnet. Dieses ringförmige Dichtungselement 22 dichtet den ersten Arbeitsanschluss 16 von einem in der Zulaufrichtung P dahinter angeordneten Rücklaufanschluss 26 ab, wenn das Einbauventil 1 in der Aufnahmebohrung eingebaut ist. Der Rücklaufanschluss 26 ist in Form einer am Gehäuse 2 umlaufenden Nut ausgebildet und verfügt über eine erste Reihe von Radialöffnungen 28 und eine von dieser fluidisch getrennten zweiten Reihe von Radialöffnungen 30, die in der Zulaufrichtung P voneinander beanstandet sind. Das heißt, dass die erste und die zweite Reihe von Radialöffnungen 28, 30 zwei voneinander getrennte Einzelkanäle des Rücklaufanschlusses 26 darstellen. Über den Rücklaufanschluss 26 kann ein dem Einbauventil 1 zugeführtes Druckmittel beispielsweise einem Öltank (nicht gezeigt) zugeführt werden.

Weiter verfügt das Gehäuse 2 über ein weiteres ringförmiges Dichtungselement 32 in Form eines O-Rings, der in einer umlaufenden Nut 34 des Gehäuses 2 aufgenommen ist und den Rücklaufanschluss 26 gegenüber eines in der Zuführrichtung P dahinter angeordneten zweiten Arbeitsanschluss 36 fluidisch abdichtet. Der zweite Arbeitsanschluss 36 ist in Form einer umlaufenden Nut 37 außen am Gehäuse 2 ausgebildet und verfügt über eine erste Reihe von Radialöffnungen 38 und eine zweite Reihe von Radialöffnungen 40. Die erste und die zweite Reihe von Radialöffnungen 38, 40 des zweiten Arbeitsanschlusses 36 sind in der Zulaufrichtung P voneinander beabstandet und fluidisch voneinander getrennt. Das heißt, dass die erste und die zweite Reihe von Radialöffnungen 38, 40 zwei voneinander getrennte Einzelkanäle des zweiten Arbeitsanschlusses 36 darstellen. Diese können beispielsweise in Form von Bohrungen in das Gehäuse 2 eingebracht werden. In der Zulaufrichtung P hinter dem zweiten Arbeitsanschluss 36 ist ein weiteres ringförmiges Dichtungselement 42 angeordnet, das den zweiten Arbeitsanschluss 36 gegenüber der Aufnahmebohrung abdichtet, wenn das Einbauventil 1 in diese eingebaut ist. Des Weiteren ist eine das Gehäuse 2 abdichtende Gehäuseabdichtung 43 vorgesehen.

An einer dem Zulaufanschluss 4 entgegen gesetzten Stirnseite des Gehäuses 2 ist an dieses ein Spulengehäuse 44 angeflanscht, das aus einem Stahlblech gefertigt ist. In dem Spulengehäuse 44 sind eine erste und eine zweite Magnetspule 46, 48 angeordnet, die von einem aus Kunststoff gefertigten Spulenträger 50 getragen werden. In diesem Ausführungsbeispiel ist der Spulenträger 50 aus Polyamid gefertigt. Die beiden Magnetspulen 46, 48 können mittels einer elektrischen Leitung 52 betätigt werden. Der Spulenträger 50 ist benachbart zu einem Polrohr 54 angeordnet, das aus einem Stahl gefertigt ist. Das Polrohr 54 weist eine magnetische Trennung in Form von zwei nicht-magnetischen Einlegeringen 56 auf, die alternativ auch als nicht-magnetische Schweißnaht ausgebildet sein können. Innerhalb des Polrohrs 54 sind eine nicht-magnetische Hülse 58 und ein aus einem Weicheisen gefertigter Magnetanker 60 angeordnet. Der Magnetanker 60 verfügt über eine Längsbohrung 62 zum Durchtritt eines Druckmittels, die eine Bewegung des Magneten in axialer Richtung ermöglicht. An einem äußeren Ende des Spulengehäuses 44 ist ein aus einem Stahl gefertigtes Endverschlussstück 64 des Polrohres 54 mitsamt einem aus Messing gefertigten Endanschlag 65 für den Magneten angeordnet.

Das Gehäuse 2 weist weiter eine Axialbohrung 66 auf, die sich entlang der Längsrichtung des Einbauventils 1, das heißt in der Zuführrichtung P, erstreckt. In der Axialbohrung 66 ist ein axialbeweglich geführtes Stellglied 68 aufgenommen, das in Form eines Ventilschiebers ausgebildet ist. Das Stellglied 68 wird von einer ersten Feder 70, die sich im Gehäuse 2 an dem Verschlussstück 6 abstützt, und einer zweiten Feder 71, die sich in dem Spulengehäuse 44 an dem Endverschlussstück 64 abstützt, federzentriert in einer Mittelstellung gehalten. Die zweite Feder 71 überträgt ihre Kraft mittels einer Mitnahmeverbindung 72 auf das Stellglied 68.

Das Stellglied 68 weist einen Außendurchmesser auf, der kleiner ist als der Innendurchmesser der Axialbohrung 66. In einem zentralen Bereich verfügt das Stellglied 68 über eine radial gerichtete, das heißt in radialer Richtung hervorstehende, Erweiterung 74, die in die Axialbohrung 66 eingepasst ist. Die Erweiterung 74 definiert eine erste Axialfläche 76 und eine dieser entgegen gesetzt gerichtete zweiten Axialfläche 78. In anderen Worten, weisen die beiden Axialflächen 76, 78 voneinander weg. Die Erweiterung 74 und damit die erste und die zweite Axialfläche 76, 78 sind so an dem Stellglied 68 angeordnet, dass sie sich in der federzentrierten Mittelstellung des Stellglieds 68 im Bereich des Rücklaufanschlusses 26 befinden. Insbesondere sind die erste Axialfläche 76 im Bereich der ersten Radialöffnung 28 und die zweite Axialfläche 78 im Bereich der zweiten Radialöffnung 30 des Rücklaufanschlusses 26 angeordnet, wenn sich das Stellglied 68 in seiner Mittelstellung befindet. Auf diese Weise bilden die Axialflächen 76, 78 jeweils eine Steuerkante 80, 82 aus, die jeweils eine der Reihen von Radialöffnungen 28, 30 des Rücklaufanschlusses 26 stetig schließen und stetig öffnen können, wenn das Stellglied 68 in eine entsprechende axiale Richtung bewegt beziehungsweise magnetisch verstellt wird.

Des Weiteren verfügt das Stellglied 68 über eine Axialbohrung 84, die sich vom Zulaufanschluss 4 in Richtung des Spulengehäuses 44 bis zu dem zweiten Arbeitsanschluss 36 erstreckt. Die Axialbohrung 84 des Stellglieds 68 ist mit dem Zulaufanschluss 4 fluidisch verbunden. Im Bereich des ersten Arbeitsanschlusses 16 und des zweiten Arbeitsanschlusses 36 sind jeweils eine Reihe von Radialöffnungen 86, 88 an dem Stellglied 68 vorgesehen, von denen jeweils eine Reihe mit dem ersten beziehungsweise dem zweiten Arbeitsanschluss 16, 36 fludisch verbunden werden können. Im Bereich der Reihen von Radialöffnungen 86, 88 ist jeweils eine umlaufende Nut 90, 92 vorgesehen.

Die Lagerung des Stellglieds 68 innerhalb der Axialbohrung 66 erfolgt über eine erste und eine zweite Buchse 94, 96, die jeweils als von dem Gehäuse 2 getrennte, das heißt als jeweils separate, Bauteile in die Axialbohrung 66 des Gehäuses 2 eingesetzt und darin befestigt sind. Die erste und zweite Buchse 94, 96 ermöglichen das Montieren des Stellglieds 68, das aufgrund seiner Erweiterung 74 sonst nur schwierig einzusetzen wäre. Wie in Figur 1 gut zu erkennen ist, erfüllen die Buchsen 94, 96 somit zwei Aufgaben, nämlich die Lagerung des Stellglieds 68 und eine räumliche Begrenzung von Druckräumen zwischen der Axialbohrung 66 und dem Stellglied 68.

Jede der Buchsen 94, 96 verfügt über eine Reihe von Radialöffnungen 98, 100, die beispielsweise als durchgehende Bohrungen ausgeführt sein können. Die Reihen von Radialöffnungen 98, 100 bilden zusammen mit den Reihen von Radialöffnungen 86, 88 des Stellglieds 68 jeweils eine Steuerkante zur Steuerung einer fluidischen Verbindung vom Zulaufanschluss 4 zum ersten beziehungsweise zum zweiten Arbeitsanschluss 16, 36 aus. Weiter weisen die Buchsen 94, 96 jeweils eine außen umlaufende Nut 102, 104 auf, die im Bereich der zweiten Reihe von Radialöffnungen 18 des ersten Arbeitsanschlusses 16 beziehungsweise der zweiten Reihe von Radialöffnung 40 des zweiten Arbeitsanschlusses 36 angeordnet sind.

Offenbart ist ein stetig verstellbares hydraulisches Einbauventil mit einem Gehäuse, das in seiner Einbaurichtung stirnseitig einen mit einer Druckmittelquelle verbindbaren Zulaufanschluss und in radialer Richtung einen ersten und einen zweiten Arbeitsanschluss sowie einen mit einem Druckmitteltank verbindbaren Rücklaufanschluss aufweist. Das Gehäuse weist eine Axialbohrung mit einem darin axialbeweglich geführten Stellglied auf, das mittels wenigstens einer Feder in einer axialen Mittelstellung haltbar und durch eine steuerbare Betätigung axial aus der Mittelstellung heraus stetig verstellbar ist. Der erste Arbeitsanschluss und/oder der zweite Arbeitsanschluss sind durch eine axiale Verstellung des Stellglieds mit dem Rücklaufanschluss fluidisch verbindbar. Erfindungsgemäß weist das Stellglied eine radiale Erweiterung mit einer ersten Steuerkante zum stetigen Öffnen und/oder Schließen einer ersten Radialöffnung des Rücklaufanschlusses und mit einer zweiten Steuerkante zum stetigen Öffnen und/oder Schließen einer zweiten Radialöffnung des Rücklaufanschlusses auf.

### Bezugszeichenliste

- 1: Einbauventil
- 2: Gehäuse
- 4: Zulaufanschluss
- 6: Verschlussstück
- 8: Eingangsbohrung
- 10: Zulaufsieb
- 12: ringförmiges Dichtungselement
- 14: umlaufende Nut
- 16: erster Arbeitsanschluss
- 18: zweite Reihe von Radialöffnungen des ersten Arbeitsanschlusses
- 20: erste Reihe von Radialöffnungen des ersten Arbeitsanschlusses
- 22: ringförmiges Dichtungselement
- 24: umlaufende Nut
- 26: Rücklaufanschluss
- 28: erste Reihe von Radialöffnungen des Rücklaufanschlusses
- 30: zweite Reihe von Radialöffnungen des Rücklaufanschlusses
- 32: ringförmiges Dichtungselement
- 34: umlaufende Nut
- 36: zweiter Arbeitsanschluss
- 37: umlaufende Nut
- 38: erste Reihe von Radialöffnungen des zweiten Arbeitsanschlusses
- 40: zweite Reihe von Radialöffnungen des zweiten Arbeitsanschlusses
- 42: ringförmiges Dichtungselement
- 43: Gehäuseabdichtung
- 44: Spulengehäuse
- 46: erste Magnetspule
- 48: zweite Magnetspule
- 50: Spulenträger
- 52: elektrische Leitung
- 54: Polrohr
- 56: Einlegering
- 58: nicht-magnetische Hülse
- 60: Magnetanker
- 62: Längsbohrung
- 64: Endverschlussstück
- 65: Endanschlag
- 66: Axialbohrung
- 68: Stellglied
- 70: erste Feder
- 71: zweite Feder
- 72: Mitnahmeverbindung
- 74: radial gerichtete Erweiterung
- 76: erste Axialfläche
- 78: zweite Axialfläche
- 80: Steuerkante
- 82: Steuerkante
- 84: Axialbohrung des Stellglieds 68
- 86: erste Reihe von Radialöffnungen des Stellglieds 68
- 88: zweite Reihe von Radialöffnungen des Stellglieds 68
- 90: umlaufende Nut
- 92: umlaufende Nut
- 94: erste Buchse
- 96: zweite Buchse
- 98: Reihe von Radialöffnungen der ersten Buchse 94
- 100: Reihe von Radialöffnungen der ersten Buchse 96
- 102: umlaufende Nut
- 104: umlaufende Nut

- A: Fließrichtung eines hydraulischen Druckmittels
- B: Fließrichtung eines hydraulischen Druckmittels
- P: Zuführrichtung eines hydraulischen Druckmittels
- T: Fließrichtung eines hydraulischen Druckmittels

## Patentansprüche

1. Stetig verstellbares hydraulisches Einbauventil (1) mit einem Gehäuse (2), das in seiner Einbaurichtung stirnseitig einen mit einer Druckmittelquelle verbindbaren Zulaufanschluss (4) und in radialer Richtung einen ersten und einen zweiten Arbeitsanschluss (16, 36) sowie einen mit einem Druckmitteltank verbindbaren Rücklaufanschluss (26) aufweist, wobei das Gehäuse (2) eine Axialbohrung (66) mit einem darin axialbeweglich geführten Stellglied (68) aufweist, das mittels wenigstens einer Feder (70, 71) in einer axialen Mittelstellung haltbar und durch eine steuerbare Betätigung axial aus der Mittelstellung heraus stetig verstellbar ist, wobei der erste Arbeitsanschluss (16) und/oder der zweite Arbeitsanschluss (36) durch eine axiale Verstellung des Stellglieds (68) mit dem Rücklaufanschluss (26) fluidisch verbindbar sind,
**dadurch gekennzeichnet,**
**dass** das Stellglied (68) eine radiale Erweiterung (74) mit einer ersten Steuerkante (80) zum stetigen Öffnen und/oder Schließen einer ersten Radialöffnung (28) des Rücklaufanschlusses (26) und mit einer zweiten Steuerkante (82) zum stetigen Öffnen und/oder Schließen einer zweiten Radialöffnung (30) des Rücklaufanschlusses (26) aufweist,
wobei die radiale Erweiterung (74) axial von einer ersten Axialfläche (76) und einer von dieser weg weisenden zweiten Axialfläche (78) begrenzt ist, wobei abseits der axialen Mittelstellung des Stellglieds (68) jeweils eine der Axialflächen (76, 78) fluidisch entlastbar ist,
wobei der erste und/oder der zweite Arbeitsanschluss (16, 36) jeweils eine erste und eine zweite Radialöffnung (20, 18, 38, 40) aufweisen, die in axialer Richtung voneinander beabstandet sind,
wobei die erste Radialöffnung (20) des ersten Arbeitsanschlusses (16) mit der ersten Axialfläche (76) des Stellglieds (68) fluidisch verbunden ist und wobei die erste Radialöffnung (38) des zweiten Arbeitsanschlusses (36) mit der zweiten Axialfläche (78) des Stellglieds (68) fluidisch verbunden ist.

2. Einbauventil nach Anspruch 1, wobei in der Mittelstellung des Stellglieds (68) die erste Axialfläche (76) im Bereich der ersten Radialöffnung (28) des Rücklaufanschlusses (26) und die zweite Axialfläche (78) im Bereich der zweiten Radialöffnung (30) des Rücklaufanschlusses (26) angeordnet sind.

3. Einbauventil nach einem der vorangehenden Ansprüche, wobei mittels der zweiten Radialöffnung (18, 40) des ersten und/oder des zweiten Arbeitsanschlusses (16, 36) eine fluidische Verbindung des Zulaufanschlusses (4) mit dem jeweiligen Arbeitsanschluss (16, 36) stetig steuerbar ist.

4. Einbauventil nach einem der vorangehenden Ansprüche, wobei das Stellglied (68) eine in Längsrichtung verlaufende Axialbohrung (84) aufweist, die mit dem Zulaufanschluss (4) fluidisch verbunden ist.

5. Einbauventil nach Anspruch 4, wobei die Axialbohrung (84) des Stellglieds (68) eine erste Radialöffnung (86) und eine zweite Radialöffnung (88) aufweist, die mit dem ersten und/oder dem zweiten Arbeitsanschluss (16, 36) fluidisch verbindbar sind.

6. Einbauventil nach einem der vorangehenden Ansprüche, wobei in dem Gehäuse (2) eine separate erste Buchse (94) und eine separate zweite Buchse (96) einbringbar und befestigbar sind, die das Stellglied (68) axialverschiebbar lagern.

7. Einbauventil nach Anspruch 6, wobei die erste Buchse (94) und/oder die zweite Buchse (96) eine Radialöffnung (98, 100) aufweisen, die mit jeweils einem Arbeitsanschluss (16, 36) fluidisch verbunden sind.

## Claims

1. Steplessly adjustable hydraulic insert valve (1) having a housing (2) which, on the end side in its installation direction, has an inflow connector (4) which can be connected to a pressure medium source and, in the radial direction, has a first and a second working connector (16, 36) and a return connector (26) which can be connected to a pressure medium tank, the housing (2) having an axial bore (66) with an actuator (68) which is guided axially movably therein, can be held in an axial center position by means of at least one spring (70, 71) and can be adjusted steplessly axially out of the center position by way of a controllable actuation, it being possible for the first working connector (16) and/or the second working connector (36) to be connected fluidically to the return connector (26) by way of an axial adjustment of the actuator (68), **characterized in that** the actuator (68) has a radial widened portion (74) with a first control edge (80) for steplessly opening and/or closing a first radial opening (28) of the return connector (26) and with a second control edge (82) for steplessly opening and/or closing a second radial opening (30) of the return connector (26), wherein the radial widened portion (74) is delimited axially by a first axial face (76) and a second axial face (78) which points away from said first axial face (76), it being possible for in each case one of the axial faces (76, 78) to be relieved fluidically away from the axial center position of the actuator (68), wherein the first and/or the second working connector (16, 36) in each case have/has a first and a second radial opening (20, 18, 38, 40) which are spaced apart from one another in the axial direction, wherein the first radial opening (20) of the first working connector (16) is connected fluidically to the first axial face (76) of the actuator (68), and wherein the first radial opening (38) of the second working connector (36) is connected fluidically to the second axial face (78) of the actuator (68).

2. Insert valve according to Claim 1, wherein, in the center position of the actuator (68), the first axial face (76) is arranged in the region of the first radial opening (28) of the return connector (26) and the second axial face (78) is arranged in the region of the second radial opening (30) of the return connector (26) .

3. Insert valve according to one of the preceding claims, wherein a fluidic connection of the inflow connector (4) to the respective working connector (16, 36) can be controlled steplessly by means of the second radial opening (18, 40) of the first and/or the second working connector (16, 36).

4. Insert valve according to one of the preceding claims, wherein the actuator (68) has an axial bore (84) which runs in the longitudinal direction and is connected fluidically to the inflow connector (4).

5. Insert valve according to Claim 4, wherein the axial bore (84) of the actuator (68) has a first radial opening (86) and a second radial opening (88) which can be connected fluidically to the first and/or the second working connector (16, 36).

6. Insert valve according to one of the preceding claims, wherein a separate first bush (94) and a separate second bush (96) which mount the actuator (68) in an axially displaceable manner can be introduced and fastened in the housing (2).

7. Insert valve according to Claim 6, wherein the first bush (94) and/or the second bush (96) have a radial opening (98, 100) which are connected fluidically to in each case one working connector (16, 36) .

## Revendications

1. Soupape intégrée (1) hydraulique réglable en continu comprenant un boîtier (2) qui comprend, du côté frontal dans sa direction de montage, un raccord d'entrée (4) pouvant être relié à une source de fluide sous pression et, dans la direction radiale, un premier et un deuxième raccord de travail (16, 36) ainsi qu'un raccord de retour (26) pouvant être relié à un réservoir de fluide sous pression, le boîtier (2) comprenant un alésage axial (66) dans lequel est guidé un élément de réglage (68) de manière axialement mobile, lequel peut être retenu dans une position centrale axiale au moyen d'au moins un ressort (70, 71) et peut être déplacé en continu hors de la position centrale par un actionnement pouvant être commandé, le premier raccord de travail (16) et/ou le deuxième raccord de travail (36) pouvant être reliés de manière fluidique au raccord de retour (26) par un déplacement axial de l'élément de réglage (68),
**caractérisée en ce que**
l'élément de réglage (68) comprend un élargissement radial (74) comportant une première arête de commande (80) pour l'ouverture et/ou la fermeture en continu d'une première ouverture radiale (28) du raccord de retour (26) et une deuxième arête de commande (82) pour l'ouverture et/ou la fermeture en continu d'une deuxième ouverture radiale (30) du raccord de retour (26), l'élargissement radial (74) étant limité axialement par une première surface axiale (76) et une deuxième surface axiale (78) opposée à celle-ci, l'une des surfaces axiales (76, 78) pouvant respectivement être déchargée fluidiquement à l'écart de la position centrale axiale de l'élément de réglage (68),
le premier et/ou le deuxième raccord de travail (16, 36) comprenant respectivement une première et une deuxième ouverture radiale (20, 18, 38, 40), lesquelles sont espacées les unes des autres dans la direction axiale,
la première ouverture radiale (20) du premier raccord de travail (16) étant reliée fluidiquement à la première surface axiale (76) de l'élément de réglage (68), et la première ouverture radiale (38) du deuxième raccord de travail (36) étant reliée fluidiquement à la deuxième surface axiale (78) de l'élément de réglage (68).

2. Soupape intégrée selon la revendication 1, dans laquelle, dans la position centrale de l'élément de réglage (68), la première surface axiale (76) est disposée dans la région de la première ouverture radiale (28) du raccord de retour (26) et la deuxième surface axiale (78) est disposée dans la région de la deuxième ouverture radiale (30) du raccord de retour (26).

3. Soupape intégrée selon l'une quelconque des revendications précédentes, dans laquelle une liaison fluidique du raccord d'entrée (4) au raccord de travail (16, 36) respectif peut être commandée en continu au moyen de la deuxième ouverture radiale (18, 40) du premier et/ou du deuxième raccord de travail (16, 36).

4. Soupape intégrée selon l'une quelconque des revendications précédentes, dans laquelle l'élément de réglage (68) comprend un alésage axial (84) s'étendant dans la direction longitudinale, lequel est relié fluidiquement au raccord d'entrée (4).

5. Soupape intégrée selon la revendication 4, dans laquelle l'alésage axial (84) de l'élément de réglage (68) comprend une première ouverture radiale (86) et une deuxième ouverture radiale (88), lesquelles peuvent être reliées fluidiquement au premier et/ou au deuxième raccord de travail (16, 36).

6. Soupape intégrée selon l'une quelconque des revendications précédentes, dans laquelle une première douille séparée (94) et une deuxième douille séparée (96) peuvent être insérées et peuvent être fixées dans le boîtier (2), lesquelles supportent l'élément de réglage (68) de manière mobile axialement.

7. Soupape intégrée selon la revendication 6, dans laquelle la première douille (94) et/ou la deuxième douille (96) comprennent une ouverture radiale (98, 100), lesquelles ouvertures radiales sont reliées fluidiquement respectivement à un raccord de travail (16, 36).
